**Europäisches Patentamt**

**European Patent Office**

**Office européen des brevets**

(19)

(11) Veröffentlichungsnummer: **0 204 086**
**B1**

# (12) EUROPÄISCHE PATENTSCHRIFT

(45) Veröffentlichungstag der Patentschrift:
**23.11.89**

(21) Anmeldenummer: **86103498.1**

(22) Anmeldetag: **14.03.86**

(51) Int. Cl.⁴: **A22C 11/02, A22C 11/08**

(54) Vorrichtung zur Abgabe von pastosem Füllgut in Portionen.

(30) Priorität: **23.05.85  DE 3518529**

(43) Veröffentlichungstag der Anmeldung:
**10.12.86 Patentblatt 86/50**

(45) Bekanntmachung des Hinweises auf die Patenterteilung:
**23.11.89 Patentblatt 89/47**

(84) Benannte Vertragsstaaten:
**AT BE CH FR GB IT LI NL SE**

(56) Entgegenhaltungen:
**EP-A- 0 013 552**
**EP-A- 0 061 995**
**BE-A- 546 505**
**CH-A- 442 125**
**CH-A- 534 484**
**DE-A- 2 249 070**
**DE-A- 3 232 185**
**FR-A- 2 075 481**
**FR-A- 2 538 104**
**GB-A- 1 056 529**
**US-A- 3 207 368**

(73) Patentinhaber: **NORDISCHER MASCHINENBAU RUD. BAADER GMBH + CO KG, Geniner Strasse 249, D-2400 Lübeck(DE)**

(72) Erfinder: **Wagner, Wolfgang, Dipl.-Ing., Sonnentauweg 21, D-2067 Reinfeld(DE)**

## Beschreibung

Die Erfindung betrifft eine Vorrichtung zur Abgabe von pastösem Füllgut in Portionen, beispielsweise zur Herstellung von Würsten durch Einfüllen des Füllgutes in bereitgestellte Schlauchhüllen oder Därme, mit Mitteln zur Beaufschlagung des Füllgutes mit einem Druckpotential zwecks Förderung desselben in ein Füllrohr durch einen Auslaßkanal hindurch mit einem in dessen Bereich angeordneten, zur Beeinflussung und Kontrolle des Füllgutstromes vorgesehenen Meß- und Absperrorgan mit einem den Querschnitt des Auslaßkanal durchsetzenden Flügelzellenrotor mit einem Inkrementalgeber zur Überwachung des Drehwinkels.

Aus der DE-A 3 246 421 ist eine Vorrichtung bekannt, bei welcher eine volumetrische Meßvorrichtung vorgesehen ist, welche einen den Querschnitt des Füllrohres durchsetzenden und von dem Füllgutstrom angetriebenen Flügelzellenrotor umfaßt, dessen Drehwinkeländerung mittels einer Meßeinrichtung überwacht wird. Der Flügelzellenrotor ist weiter mit einer auf diesen einwirkenden und von der Meßeinrichtung gesteuerten Bremseinrichtung versehen, so daß die beschriebene Einrichtung eine Kombination aus Absperr- und Meßeinrichtung, letztgenannte zur Bestimmung und Steuerung des Portioniervolumens, darstellt.

Wie die Praxis erweist, ist es zum Betrieb dieser Einrichtung notwendig, auf das Füllgut einen unerwünscht hohen Druck einwirken zu lassen, um insbesondere eine ausreichende Füll- und Portioniergeschwindigkeit sicherzustellen. Dabei ist der erforderliche Füllgutdruck beträchtlich höher, als für den reinen Füllvorgang auch bei hoher Füllgeschwindigkeit notwendig wäre.

Diese Gegebenheiten haben entscheidende nachteilige Folgen. So zeigt sich insbesondere bei kritischem Füllgut eine erhöhte Neigung zur Entmischung und insgesamt eine ausgeprägte Tendenz zur Qualitätsminderung, beispielsweise durch erhöhten Leckfluß an gleitenden Dichtflächen. Darüberhinaus gehen mit diesem Erfordernis des hohen Druckes hohe Anforderungen an die Paßgenauigkeit, insbesondere der bewegten Elemente und an die Stabilität der Bauteile einher, was wiederum einen unerwünscht hohen Aufwand erforderlich macht. Schließlich ist noch darauf hinzuweisen, daß die Energieversorgung ebenfalls entsprechend aufwendiger ist. Ein weiterer Nachteil zeigt sich darin, daß infolge der hohen Kompression des Füllgutes nach dem Absperren des Absperrelementes beim Erreichen des gewünschten Dosiervolumens eine entsprechende Expansion mit der Wirkung eines übergroßen Nachflusses an Füllgut erfolgt. Dabei gibt die bekannte Einrichtung keine Möglichkeit des Ausgleiches dieses Nachteils.

Eine diesem Zweck dienende Einrichtung ist beispielsweise aus der DE-A 2 137 278 zu entnehmen. Bei dieser Einrichtung ist ein Dreh- oder Flachschieber als Verschlußorgan vorgesehen, welches an seiner dem freien Ende des Füllrohres zugewandten Seite eine Absetzung aufweist, die in der Schließstellung einen Saugraum bildet. Die Größe des Saugraumes ist durch einen veränderbaren Anschlag beeinflußbar, so daß das Maß der Rücksaugung einstellbar ist.

Ein solches Verschlußorgan findet üblicherweise Verwendung in Portioniereinrichtungen, deren Grundaufbau beispielsweise aus der EP-A 61 995 entnehmbar ist. Dabei ist eine volumetrische Meßeinrichtung vorgeschaltet, die eine von der Messung abhängige Steuerung des Verschlußorgans bewirkt, und die in diesem Falle eine Direktüberwachung des Durchflusses des zu portionierenden Füllgutes ermöglichen soll. Für die hier verwendete Ausführung der volumetrischen Meßeinrichtung als passiv getriebener Flügelzellenrotor gelten aber ebenfalls die oben beschriebenen, im wesentlichen aus dem erforderlichen hohen Förderdruck resultierenden Nachteile. Darüberhinaus ist von Nachteil, daß derartige Verschlußorgane infolge der Querschnittsänderung des Auslaßkanals während der Betätigung das Füllgut durch Scherung und insbesondere in der Phase kurz vor dem Verschluß oder zu Beginn des Öffnens durch Spaltfluß in unerwünschter Weise beanspruchen.

Eine weitere Möglichkeit des Einsatzes des Verschlußorgans nach der DE-A 2 137 278 besteht entsprechend dem Hintergrund dieser Schrift in der Verwendung als Absperrvorrichtung an Füllmaschinen, mittels welcher Schlauchabschnitte für die Erzeugung von Würsten gefüllt werden, welche als ganzes oder in Abschnitten über die Waage an den Verbraucher gehen.

Schließlich sei noch auf die DE-C 937 561 hingewiesen, die eine Einrichtung für die dosierte Abgabe rieselfähigen Schüttgutes zeigt und auf der Wirkungsweise eines Zellenradzuteilers basiert. Das hier gezeigte, zur Herstellung eines bestimmten Mischungsverhältnisses oder zur Regelung einer Durchsatzleistung eingesetzte Gerät weist ein zusätzliches, separat fortschaltbares Zellenradteil auf, mit dessen Hilfe eine Mischkomponente mit einstellbarem Anteil an der beabsichtigten Mischung zugegeben werden kann.

Mit dieser Einrichtung ist die Abgabe eines Füllgutes gegen ein beispielsweise aus Fließwiderständen resultierendes Druckpotential nicht möglich. Ebensowenig ist das Konzept geeignet, gewichts- und/oder volumengenaue Kleinportionen in hoher Portionsfolge herzustellen.

Es ist daher die Aufgabe der Erfindung, eine Vorrichtung der im Erfindungsbetreff genannten Art vorzuschlagen, welche eine schonende und dabei gewichts- und/oder volumengenaue Abfüllung beliebiger Portionsgrößen bei hoher Taktfolge in bereitgestellte Schlauchfolien oder Därme ermöglicht. Außerdem soll im Hinblick auf eine Kombination dieser Vorrichtung mit einer Verschließmaschine auf einfache Weise möglich sein, eine vorgebbare Schlauchlänge beispielsweise zur Anbringung zweier Verschlüsse hintereinander, von Füllgut freizumachen.

Zur Lösung dieser Aufgaben ist zunächst entsprechend dem Hauptanspruch vorgesehen, daß der Flügelzellenrotor aktiv zwecks Ausübung seiner Doppelfunktion als Meß- und Absperrorgan mit einem schrittweise oder kontinuierlich arbeitenden Antrieb verbunden ist, welcher im Laufzustand für den Durchlaß und die Überwachung der vorgegebenen Dosiermenge und in Stoppstellung für eine Unterbindung des Ausflusses des unter statischem Druck stehenden Füllgutes Sorge trägt. Dabei findet als Antrieb vorzugsweise eine mittels eines Inkrementalgebers überwachter Hydraulikmotor Verwendung, der zum Zwecke der genauen Abbremsung bei Erreichen der vorgewählten Portionierung und Fixierung in der Stillstandphase über ein Ventil gesteuert wird, welches in Ruhestellung eine Sperrung des Druckmittelzulaufes und des -ablaufes bewirkt.

Die Erfindung wird nachfolgend anhand der Zeichnung beschrieben. Es zeigt

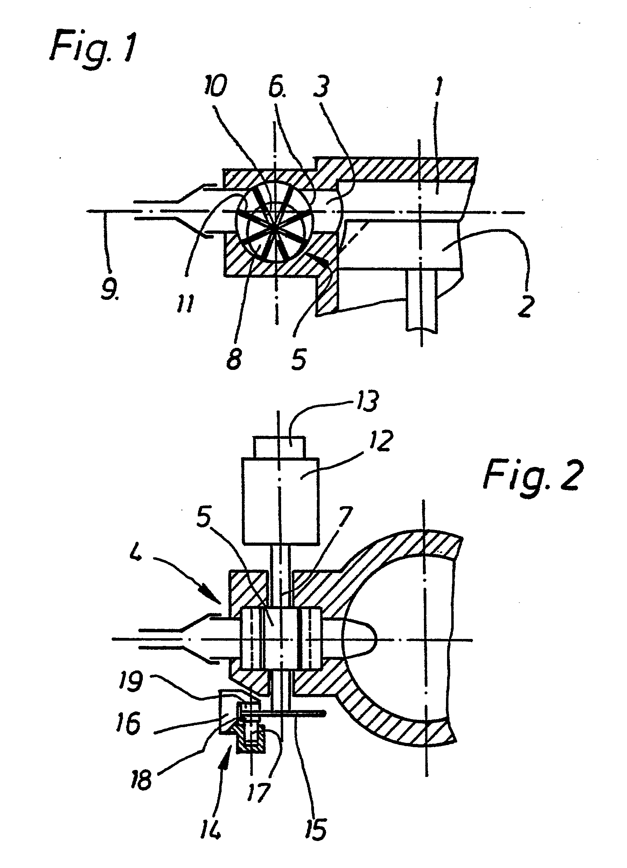

Fig. 1 einen Teillängsschnitt durch die Vorrichtung im Bereich des Füllrohres in schematisierter Darstellung,

Fig. 2 einen Teilquerschnitt durch die Vorrichtung in der Ebene der Achse des Flügelzellenrohres.

In dem Auslaßkanal 3 einer lediglich andeutungsweise dargestellten Füllmaschine für Wurstbrät mit einem in einem Preßraum 1 geführten und auf geeignete Weise angetriebenen Preßkolben 2 ist eine Portioniereinheit 4 mit einem Flügelzellenrotor 4 angeordnet. Dieser ist in einer den Auslaßkanal 3 quer durchsetzenden Bohrung 6 um eine Achse 7 umlaufend derart exzentrisch gelagert, daß die Rotornabe 8 die Wandung der Bohrung 6 an ihrer von der Achse 9 des Auslaßkanals 3 am weitesten entfernten Stelle tangiert. Die Rotornabe 8 ist mit radialen Schlitzen 10 versehen, in denen Flügel 11 angeordnet sind, welche sich unter zentrifugal gerichteter Federkraft mit ihren Außenkanten gegenüber der Wandung der Bohrung 6 abstützen. Die Achse 7 des Flügelzellenrotors 5 ist zum Zwecke der Übertragung eines Antriebsmomentes mit einem schrittweise oder kontinuierlich arbeitenden Antrieb 12 verbunden. Auf der gleichen Achse ist zur Überwachung der Drehwinkeländerung des Flügelzellenrotors 5 ein Inkrementalgeber 13 angeordnet, dessen Meßsignale in geeigneter Weise zur Steuerung des Antriebes 12 verwendet werden. Je nach Funktionsprinzip desselben kann der Flügelzellenrotor 5 weiter mit einer Bremseinrichtung 14 versehen sein, welche eine von einem Bremssattel 16 umgriffene Bremsscheibe 15 aufweist.

Der Bremssattel 16 umfaßt einen als Plunger wirksamen Kolben 17, welcher direkt auf eine der Flanke der Bremsscheibe 15 gegenüberstehende Bremsbacke 18 und indirekt über den Bremssattel 16 auf eine weitere, der anderen Flanke der Bremsscheibe 15 gegenüberstehende Bremsbacke 19 einwirkt.

Die Wirkungsweise der Vorrichtung ist folgende: Das in dem Preßraum 1 befindliche Wurstbrät wird durch Druckbeaufschlagung des Preßkolbens 2 unter Druck gesetzt, wodurch es durch den Auslaßkanal 3 abzufließen sucht. Dem wirkt jedoch der diesen durchsetzende Flügelzellenrotor 5 entgegen, dessen Anordnung und Ausführung so getroffen ist, daß dessen Festhalten eine hermetische Absperrung des Auslaßkanals 3 bewirkt. Zum Ablassen einer Portion wird der Flügelzellenrotor 5 mittels des Antriebes 12 in Drehung versetzt und nach Erreichen des vorbestimmten Portionsgewichtes oder -volumens blockiert. Das kann unter Nutzung der Tatsache, daß Proportionalität zwischen dem Drehwinkel des Flügelzellenrotors 5 und des Volumens des dieses passierenden Wurstbrätes besteht, auf verschiedene Art und Weise geschehen. Ist der Antrieb 12 ein Schrittmotor, so wird mittels einer geeigneten Steuerung eine der gewünschten Portioniermenge entsprechende Schrittzahl vorgegeben, nach deren Ablauf eine Blockierung des Flügelzellenrotors 5 erfolgt. Wird ein Hydraulikmotor verwendet, so wird dessen Bewegung mittels des Inkrementalgebers 13 überwacht, indem dessen Meßsignale in vorgegebener Weise entweder zur Steuerung eines den Hydraulikmotor schaltenden Ventils oder zur Betätigung der Bremseinrichtung 14 benutzt werden, um den Flügelzellenrotor 5 nach Durchlaß der gewünschten Wurstbrätportion als Sperrelement wirksam werden zu lassen.

Die Abgabe der Portion erfolgt in eine unter atmosphärischem Druck stehende Umgebung, so daß grundsätzlich eine Entspannung des aus einem Raum höheren Druckpotential geförderten Wurstbrätes vorsichgeht. Die damit einhergehende Volumenänderung der abgegebenen Portion hängt von mannigfaltigen Faktoren ab, beispielsweise der Beschaffenheit des Wurstbrätes, aus der sich die Kompressibilität und die Rückstellfähigkeit desselben herleitet, der Stillstandzeit zwischen zwei Portionen usw. Dieser, die Portioniergenauigkeit beeinflussende Vorgang ist dadurch ausgleichbar, daß der Antrieb 12 nach einem Portionstakt über einen entsprechenden Drehwinkel gegenläufig beaufschlagt wird, bevor der nächste Portioniertakt erfolgt. Wird die Vorrichtung mit einer Verschließmaschine, beispielsweise einer solchen zur Anbringung von Doppelclips kombiniert, so kann nach dem durch die Clipvorrichtung vorgenommenen Zukneifen der Schlauchhülle hinter der ausgebrachten Portion mit der Vorgabe des rückwärts zu durchlaufenden Drehwinkels eine füllgutfreie Zone definierter Länge erzeugt werden.

**Patentansprüche**

1. Vorrichtung zur Abgabe von pastösem Füllgut in Portionen, beispielsweise zur Herstellung von Würsten durch Einfüllen des Füllgutes in bereitgestellte Schlauchhüllen oder Därme, mit Mitteln zur Beaufschlagung des Füllgutes mit einem statischen Druckpotential zwecks Förderung desselben in ein Füllrohr durch einen Auslaßkanal (3) hindurch mit einem in dessen Bereich angeordneten Meß- und Absperrorgan mit einem den Querschnitt des Auslaßkanals durchsetzenden Flügelzellenrotor (5) mit einem Inkrementalgeber (13) zur Überwachung des Drehwinkels, dadurch gekennzeichnet, daß der Flügelzellenrotor (5) aktiv zwecks Ausübung seiner Doppelfunktion als Meß- und Absperrorgan mit einem schrittweise oder kontinuierlich arbeitenden Antrieb (12) verbunden ist, welcher im Laufzustand für den Durchlaß und die Überwachung der vorgegebenen Dosiermenge und in Stoppstellung für eine Unterbindung des Ausflusses des unter statischem Druck stehenden Füllgutes Sorge trägt.

2. Vorrichtung nach Anspruch 1, dadurch gekennzeichnet, daß als Antrieb (12) ein mittels eines Inkrementalgebers (13) überwachter Hydraulikmotor Verwendung findet.

3. Vorrichtung nach Anspruch 2, dadurch gekennzeichnet, daß der Hydraulikmotor über ein Ventil gesteuert wird, welches in Ruhestellung eine Sperrung des Druckmittelzulaufes und des -ablaufes bewirkt.

**Claims**

1. Device for the delivery of pasty filling stock in portions, for example for the production of sausages by feeding the filling stock into hose sleeves or skins that have been placed ready, with means for loading the filling stock by a static pressure potential for the purpose of conveying the same into a filling tube through an outlet channel (3) with a measuring and shut-off organ, which is arranged in the region thereof, with a blade cell rotor (5), which passes through the cross-section of the outlet channel, with an incremental transmitter (13) for monitoring the rotational angle, characterised thereby, that the blade cell rotor (5) is for the purpose of the exercise of its double function as measuring and shut-off organ actively connected with a drive (12), which operates stepwise or continuously and takes care in the running state of the passage and the monitoring of the preset metering quantity and in the stopped setting of a prevention of the outflow of the filling stock standing under static pressure.

2. Device according to claim 1, characterised thereby, that an hydraulic motor, which is monitored by means of an incremental transmitter (13) finds use as drive (12).

3. Device according to claim 2, characterised thereby, that the hydraulic motor is controlled by way of a valve which in the rest setting effects a blocking of the inflow and the outflow of the pressure medium.

**Revendications**

1. Dispositif pour production de portions d'une matière pâteuse de remplissage, par exemple, pour la fabrication de saucisses, par remplissage de la matière de remplissage dans des enveloppes en tube souple ou des boyaux préparés à l'avance, comportant des moyens pour appliquer à la matière de remplissage un potentiel de pression statique en amenant celle-ci dans un tuyau de remplissage par un canal d'évacuation (3) comportant dans son voisinage un organe de mesure et de blocage comprenant un rotor (5) à cellules semi-rotatif traversant la section du canal d'évacuation et comportant un indicateur (13) d'incrément pour contrôler l'angle de rotation, caractérisé en ce que le rotor (5) à cellules semi-rotatif est relié de façon active pour remplir sa double fonction d'organe de mesure et de blocage à un entraînement (12) travaillant pas-à-pas ou de façon continue, qui réalise dans l'état de marche le passage et le contrôle de la quantité de dosage prédéterminée et qui à l'état d'arrêt réalise un arrêt de l'écoulement de la matière de remplissage soumise à pression statique.

2. Dispositif selon la revendication 1, caractérisé par l'utilisation comme entraînement (12) d'un moteur hydraulique contrôlé au moyen d'un indicateur d'incrément (13).

3. Dispositif selon la revendication 2, caractérisé en ce que le moteur hydraulique est commandé au moyen d'une valve, qui à l'ét, at d'arrêt réalise un blocage de l'amenée et de l'évacuation de l'agent de pression.

# Fig. 1

# Fig. 2